# EUROPÄISCHE PATENTSCHRIFT

(11) **EP 3 568 511 B1**
(45) Veröffentlichungstag und Bekanntmachung des Hinweises auf die Patenterteilung: **26.04.2023**
(21) Anmeldenummer: 18700478.3
(22) Anmeldetag: 11.01.2018
(51) Int. Cl.: D02G 1/20, D02J 1/08, D02J 1/22, D02J 13/00, D02G 1/16, D01D 5/22, D01D 13/02

(54) **VORRICHTUNG UND VERFAHREN ZUR ERZEUGUNG EINES TEXTURIERTEN FILAMENTES ODER GARNES**
DEVICE AND METHOD FOR PRODUCING A TEXTURED FILAMENT OR YARN
DISPOSITIF ET PROCÉDÉ DE FABRICATION D'UN FILAMENT OU D'UN FIL TEXTURÉ

(30) Priorität: 12.01.2017 DE 102017100488
(43) Veröffentlichungstag der Anmeldung: 20.11.2019
(73) Patentinhaber: Trützschler Group SE, 41199 Mönchengladbach (DE)
(72) Erfinder: NASRI, Lassad, 8406 Winterthur (CH); CLARYSSE, Jean, 8532 Warth (CH)
(86) Internationale Anmeldenummer: PCT/EP2018/050636
(87) Internationale Veröffentlichungsnummer: WO 2018/130604

(56) Entgegenhaltungen:
- WO-A1-2004/018750
- DE-A1- 10 236 359
- JP-A- 2006 097 177

## Beschreibung

Die vorliegende Erfindung betrifft eine Vorrichtung und ein Verfahren zur Erzeugung eines texturierten Filamentes oder Garnes, wobei mindestens ein Filament in eine Streckvorrichtung geführt wird, dort von einem Paar Einlaufrollen zu mindestens zwei Paaren von Streckwerksrollen geführt und von diesen verstreckt wird, denen eine Texturiervorrichtung mit einer Kühltrommel nachgeordnet ist, nach dem Oberbegriff von Anspruch 1.

Zur Herstellung von textilen Waren, insbesondere von Teppichen und Polstern, werden Endlosfilamente in einer Texturierdüse gekräuselt, so dass ein gekrimptes Garn entsteht. Dabei wird das in der Texturierdüse gekräuselte Endlosfilament nahezu spannungsfrei auf der Kühltrommel abgelegt, die durch einen im Inneren der Kühltrommel angelegten Unterdruck das gekräuselte Endlosfilament kraftschlüssig festhält. Beim nachfolgenden Abziehen des Endlosfilamentes von der Kühltrommel entsteht eine sehr geringe Fadenspannung, die durch nachfolgende Elemente, wie beispielsweise eine Fadenbremse, erhöht wird. Diese Fadenbremsen haben jedoch den Nachteil, dass durch die damit verbundene Reibung bzw. Wärme ein Teil der Kräuselung aufgehoben wird, was für das Endprodukt nachteilig ist.

Da auf diesen Anlagen durch Vermischen mehrerer Fadenbündel unterschiedlicher Farben auch Buntgarne erzeugt werden, müssen die einzelnen Endlosfilamente so miteinander verbunden werden, dass eine eindeutige Farbtrennung erkennbar ist, um an dem Endprodukt einen klaren Farbeffekt zu erzeugen. Üblicherweise erfolgt dies durch ein Tangeln, in dem die Fäden durch eine seitliche Druckluftbeaufschlagung miteinander verflochten werden. Anschließend erfolgt das Kräuseln in der Stauchkammer einer Texturierdüse.

Um eine Vermischung der Farben zu vermeiden, also eine hohe Farbklarheit zu erzielen, ist es Stand der Technik, Tangeln nach dem Spinnstreckverfahren und nach der Texturierung anzuwenden, da nicht die Deformation des kompletten Stranges erwünscht ist, sondern die Deformation der einzelnen Filamente. Dabei wird unterstellt, dass ein Tangeln vor dem Verstrecken und Texturieren zu einem Verkleben oder zu starkem aneinanderheften der Filamente führt, was zwangsläufig zu einer Vermischung oder unklaren Abgrenzung der Farben führt. Damit wird eine Anlage zur Verarbeitung von sechs oder neun Filamenten sehr aufwändig, da die Texturierdüse ebenfalls sechs oder neun Kanäle umfassen muss und die Kühltrommel, Streckwerksrollen und die Umlenkungen einschließlich Lager und Temperaturführung entsprechend dimensioniert werden müssen, um die sechs bzw. neun Filamente mit Abstand zueinander zu führen.

Die EP 0784109 B1 beschreibt ein Verfahren zur Herstellung eines Garnes mit einer Mehrzahl von verschiedenfarbigen Filamentbündel. Dabei wird mindestens ein Filamentbündel individuell oberhalb des Verbindungsschrittes und unterhalb aller vorangegangenen Streck- und Texturiervorgänge behandelt.

In der DE 10236359 A1 wird ein mehrstufiges Texturieren beschrieben, wobei die einzelnen Filamente vor oder nach dem Texturieren separat verwirbelt werden.

In der JP2006097177 wird ein Verfahren zum Verstrecken von Filamenten beschrieben, bei dem erhitzte Streckwerksrollen und nicht erhitzte Streckwerksrollen als Kühlrollen verwendet werden.

Aufgabe der Erfindung ist die Weiterbildung einer bekannten Vorrichtung und eines Verfahrens mit dem Ziel, die Qualität eines texturierten Endlosfilamentes zu erhöhen. Dabei soll auch die Herstellung eines texturierten mehrfarbigen Garnes vereinfacht werden, um ein Endprodukt mit einem klaren Farbeffekt herzustellen. Diese Aufgabe wird ausgehend von einer Vorrichtung gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass zur Erzeugung eines texturierten Filamentes oder Garnes mindestens ein Filament in eine Streckvorrichtung geführt wird, dort von einem Paar Einlaufrollen zu mindestens zwei Paaren von Streckwerksrollen geführt und von diesen verstreckt wird, denen eine Texturiervorrichtung mit einer Kühltrommel nachgeordnet ist.

Die Erfindung ist dadurch gekennzeichnet, dass nach der Texturiervorrichtung mit der Kühltrommel mindestens eine Streckwerksrolle angeordnet ist, durch die das Filament bzw. Garn auf eine Temperatur von 0°C bis 50°C kühlt wird. Der Vorteil dieser Anlage besteht darin, dass die gekräuselten Filamente bzw. Garn nach dem Texturieren mit der Kühltrommel über mindestens ein weiteres Paar von Streckwerksrollen laufen und dort der Crimp bei einer Temperatur von 0° bis 50°C, vorzugsweise bei einer Temperatur von 5° bis 45°C weiter fixiert wird, was sich auf das Endprodukt vorteilhaft auswirkt. Durch die aktive Kühlung der gekräuselten Filamente bzw. des Garnes wird die Kristallinität sowie die Orientierung der Moleküle positiv beeinflusst, wodurch die gekräuselten Filamente elastischer werden. Die Kühlung erfolgt activ, in dem die Streckwerksrollen mittels umlaufenden Medien (Luft, Wasser) von innen gekühlt werden.

Vorzugsweise ist die mindestens eine Streckwerksrolle als gekühlte Monorolle ausgebildet.

In einer bevorzugten Ausführungsform sind mindestens zwei gekühlte Streckwerksrollen nach der Kühltrommel angeordnet, wodurch die Verweilzeit zur Kühlung bei hohen Produktionsgeschwindigkeiten verlängert wird.

Vorzugsweise sind vier Streckwerksrollen nach der Kühltrommel angeordnet, wobei die erste und/oder die vierte Streckwerksrolle als gekühlte Streckwerksrolle ausgebildet ist. Damit kann vorteilhafterweise eine Streckung bzw. Relaxierung der texturierten Filamente bzw. des Garnes erreicht werden und dies mit der Kühlung vorher und/oder nachher fixiert werden.

Insbesondere bei sehr hohen Produktionsgeschwindigkeiten können mit vier gekühlten Streckwerksrollen nach der Kühltrommel die texturierten Filamente bzw. das Garn sicher fixiert und die Kräuselung der Filamente dauerhaft beibehalten werden.

Nach einem weiteren Ausführungsbeispiel können mehrere Filamente in der Texturiervorrichtung zu einem Garn verwirbelt werden. Dies ist insbesondere bei unterschiedlich farbigen Filamenten vorteilhaft, da diese im entstehenden Garn ihre Farbklarheit beibehalten. Hierzu wird vor der Texturiereinrichtung eine Düse zum separaten Verknoten der einzelnen Filamente angeordnet. Entgegen der allgemeinen Auffassung der Fachleute hat sich überraschenderweise gezeigt, dass über die Verweilzeit in der Düse ein nachfolgendes Verkleben und Verbinden der Filamente während des Texturierens unterbunden werden kann, so dass eine sehr hohe Farbklarheit erreichbar ist.

In einer weiteren Ausführungsform ist die Düse zum Verknoten der Filamente nach der zweistufigen Verstreckung und vor der Texturierdüse angeordnet. Dabei weist das Paar an Streckwerksrollen vor der Düse die höchste Geschwindigkeit in der Streckvorrichtung auf, mit der die Filamente gefördert werden. Dadurch kann eine minimale Verweilzeit in der Düse erreicht werden, die ein Vermischen der Farben aufgrund der möglichen Verbindung der Filamente miteinander verhindert. Die Geschwindigkeit der Filamente auf diesen Streckwerksrollen beträgt dabei mindestens 1.700 m/min.

Um eine gleichmäßige Erwärmung der Filamente zu erreichen, sind die Streckwerksrollen als beheizte Duorollen ausgebildet.

Mit weiterem Vorteil werden die Filamente, die aus einer Vielzahl von Endlosfilamenten bestehen, vor dem Verstrecken mittels einer Düse jeweils separat verknotet. Durch die Verknotung kann der nachfolgende Prozess der zweiten Verknotung weiter verbessert werden, da die Struktur der einzelnen Filamente dadurch stabilisiert wird.

Grundsätzlich können die Düsen zur Verwirbelung und Verknotung mit einem Druck (Überdruck) von 0,01 bis 12 bar betrieben werden, wobei ein gasförmiges Medium, vorzugsweise Luft seitlich in die Düse eingeführt wird und zur Verwirbelung bzw. Verknotung der Filamente führt. Die besten Ergebnisse haben sich bei beiden Düsen gezeigt, wenn der Druck zwischen 0,01 bis 6 bar beträgt. Dabei wurde die höchste Farbklarheit erreicht.

In der zweiten Ausführungsform ist die Düse zum Verknoten der Filamente nach dem Paar der Einlaufrollen und vor den Streckwerksrollen angeordnet. Nach der vorherrschenden Meinung würde bei einem nachfolgenden Verstrecken und Texturieren die Farbklarheit des Garnes zurückgehen, da die einzelnen Filamente im weiteren Prozess miteinander verkleben. Hier konnte durch eine sehr kurze Verweilzeit der Filamente in der Düse ein nachfolgendes Verkleben und Verbinden der Filamente unterbunden werden, so dass die erwünschte Farbklarheit ebenfalls zu Tage tritt.

Das erfindungsgemäße Verfahren nach Anspruch 13 löst die Aufgabe dadurch, indem mindestens ein Filament in eine Streckvorrichtung geführt wird, dort von einem Paar Einlaufrollen zu mindestens zwei Paaren von Streckwerksrollen geführt und von diesen verstreckt wird, anschließend texturiert und auf einer Kühltrommel gekühlt wird.

Die Erfindung ist dadurch gekennzeichnet, dass das texturierte Filament bzw. Garn nach der Kühltrommel mittels mindestens einer Streckwerksrolle auf eine Temperatur von 0°C bis 50°C kühlt wird. Die Kühlung durch die mindestens eine Streckwerksrolle erfolgt activ.

Der Vorteil des Verfahrens besteht darin, dass die gekräuselten Filamente bzw. Garn nach dem Texturieren mit der Kühltrommel über mindestens ein weiteres gekühltes Paar von Streckwerksrollen laufen und dort der Crimp bei einer Temperatur von 0° bis 50°C, vorzugsweise bei einer Temperatur von 5° bis 45°C weiter fixiert wird, was sich auf das Endprodukt vorteilhaft auswirkt. Durch die aktive Kühlung der gekräuselten Filamente bzw. des Garnes wird die Kristallinität sowie die Orientierung der Moleküle positiv beeinflusst, wodurch die gekräuselten Filamente elastischer werden.

Vorzugsweise erfolgt die Kühlung des mindestens einen texturierten Filamentes bzw. Garnes auf einer Monorolle.

In einer bevorzugten Ausführungsform erfolgt die Kühlung der texturierten Filamente bzw. Garne durch mindestens zwei gekühlte Streckwerksrollen, die nach der Kühltrommel angeordnet sind, wodurch die Verweilzeit zur Kühlung bei hohen Produktionsgeschwindigkeiten verlängert wird.

Vorzugsweise sind vier Streckwerksrollen nach der Kühltrommel angeordnet, wobei die erste und/oder die vierte Streckwerksrolle als gekühlte Streckwerksrolle ausgebildet ist. Damit kann vorteilhafterweise eine Streckung bzw. Relaxierung der texturierten Filamente bzw. des Garnes erreicht werden und dies mit der Kühlung vorher oder nachher fixiert werden.

Insbesondere bei sehr hohen Produktionsgeschwindigkeiten können mit vier gekühlte Streckwerksrollen nach der Kühltrommel die texturierten Filamente bzw. das Garn sicher fixiert und die Kräuselung der Filamente dauerhaft beibehalten werden.

Nach einem weiteren Ausführungsbeispiel können mehrere Filamente, insbesondere farbige Filamente, vor der Texturiervorrichtung verknotet werden. Dies ist insbesondere bei unterschiedlich farbigen Filamenten vorteilhaft, da diese im entstehenden Garn ihre Farbklarheit beibehalten. Die separate Verknotung der Filamente erfolgt vor dem Texturieren, wobei aufgrund der kurzen Verweilzeit der Filamente in der Düse es sich überraschenderweise gezeigt, dass ein Verkleben und Verbinden der Filamente während des Verwirbelns unterbunden werden kann, so dass eine sehr hohe Farbklarheit erreichbar ist.

In einer weiteren Ausführungsform erfolgt die Verknotung der Filamente nach der zweistufigen Verstreckung und vor dem Texturieren.

Mit weiterem Vorteil werden die Filamente, die aus einer Vielzahl von Endlosfilamenten bestehen, vor dem Verstrecken mittels einer Düse jeweils separat verknotet. Durch die Verknotung kann der nachfolgende Prozess der Verwirbelung weiter verbessert werden, da die Struktur der einzelnen Filamente dadurch stabilisiert wird.

Grundsätzlich erfolgt die Verknotung mit einem Druck von 0,01 bis 12 bar, wobei ein gasförmiges Medium, vorzugsweise Luft seitlich in die Düse eingeführt wird und zur Verwirbelung bzw. Verknotung der Filamente führt. Die besten Ergebnisse zeigen sich, wenn der seitliche Druck auf die Filamente zwischen 0,01 bis 6 bar beträgt. Dabei wurde die höchste Farbklarheit erreicht.

In einer weiteren Ausführungsform kann die Verknotung der Filamente vor dem Verstrecken erfolgen. Nach der vorherrschenden Meinung würde bei einem nachfolgenden Verstrecken und Texturieren die Farbklarheit des Garnes zurückgehen, da die einzelnen Filamente im weiteren Prozess miteinander verkleben, was sich durch die Versuche nicht bestätigt hat. Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigen:
- Figur 1:: eine Teildarstellung auf ein erstes Ausführungsbeispiel einer Spinnstreckanlage;
- Figur 2:: eine Teildarstellung auf ein zweites Ausführungsbeispiel einer Spinnstreckanlage;
- Figur 3:: eine Teildarstellung auf ein drittes Ausführungsbeispiel einer Spinnstreckanlage.

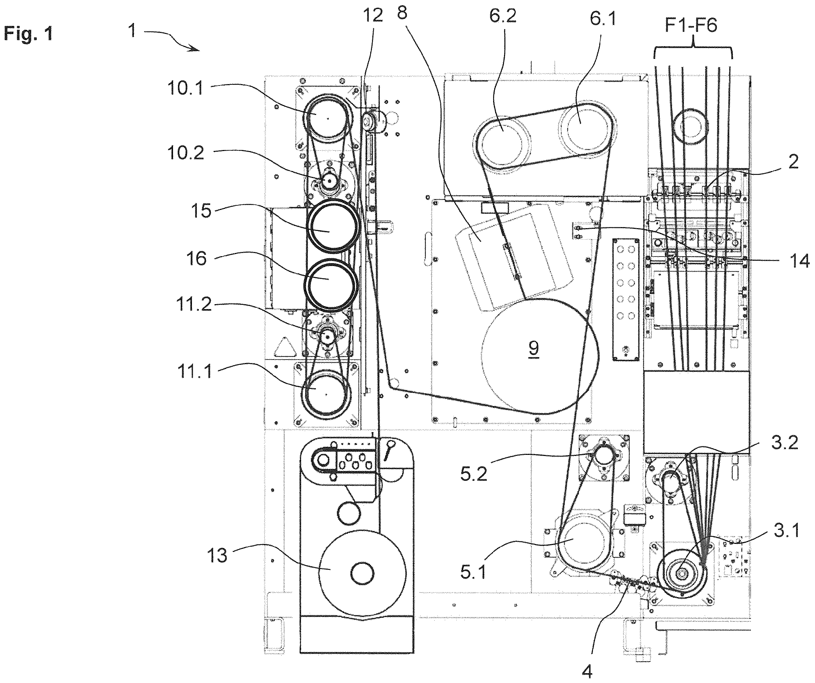

Nach einem ersten Ausführungsbeispiel nach der Figur 1 ist ein Ausschnitt einer Spinn-Streckanlage dargestellt, bei der sechs Filamente F1 - F6, beispielsweise aus Polyamid 6 (PA6), aus nicht dargestellten Spinndüsen in die Streckvorrichtung 1 einlaufen. Grundsätzlich ist bei dieser Art der Anlage die Verarbeitung von bis zu zwölf Filamenten möglich, wobei dieses Ausführungsbeispiel die Verarbeitung von sechs Filamenten beschreibt. Jedes Filament F1 - F6 besteht aus bis zu 1000 Endlosfilamenten, die unterhalb des Spinnkopfes vor der Streckvorrichtung 1 zu einem Filament F1 - F6 zusammengefasst werden. Die Filamente F1 - F6 aus Polyamid 6 laufen mit einer Geschwindigkeit von 925 m/min in die Streckvorrichtung 1 ein, werden in einer Präparationsvorrichtung 2 mit Öl oder einem Gleitmittel behandelt, und über ein Einlaufrollenpaar 3.1, 3.2 zu einem ersten Streckwerksrollenpaar 5.1, 5.2 umgeleitet. Zwischen dem Einlaufrollenpaar 3.1, 3.2 zu dem ersten Streckwerksrollenpaar 5.1, 5.2 findet keine oder nur eine leichte Verstreckung mit einem Faktor bis zu 1,05 statt.

Zwischen dem Einlaufrollenpaar 3.1, 3.2 und dem Streckrollenpaar 5.1, 5.2 kann optional eine erste Düse 4 angeordnet sein, in der die sechs Filamente F1 - F6 seitlich mit einem gasförmigen Medium, vorzugsweise Luft, mit einem Druck von 0,01 - 12 bar beaufschlagt werden. Die Düse 4 weist für jedes Filament F1 - F6 eine separate Führung auf, so dass die Filamente F1 - F6 nicht miteinander in Berührung kommen. Innerhalb der Führung der Düse 4 werden die bis zu 1000 Endlosfilamente miteinander verknotet, so dass sechs separat verknotete Filamente F1 - F6 aus der Düse 4 auslaufen und auf das Streckwerksrollenpaar 5.1, 5.2 geführt werden.

Beim Streckwerksrollenpaar 5.1, 5.2 werden die Filamente F1 - F6 bei einer Geschwindigkeit von 925 m/min auf eine Temperatur von 65°C abgekühlt. Dieses Streckwerksrollenpaar 5.1, 5.2 ist als Monorolle ausgebildet, bei der nur die Streckwerksrolle 5.1 angetrieben ist. Die Streckwerksrolle 5.2 wird nicht angetrieben, sondern dreht sich über die Spannung der Filamente F1 - F6 mit. Die Streckwerksrollen 5.1, 5.2 können auch als Duorollen ausgeführt sein, bei denen beide Rollen angetrieben sind, und die im Wesentlichen einen gleich großen Außendurchmesser aufweisen. Dies hat den Vorteil, dass die stufenweise Erwärmung der Filamente F1 - F6 kontinuierlicher über eine längere Zeit erfolgen kann, was für die Umbildung der Molekülketten vorteilhaft ist. Die Oberflächen der Paare an Streckwerksrollen können dabei über ein nicht dargestelltes Heizsystem, beispielsweise ein elektrisches, dampf- oder flüssigkeitsbasiertes Heizsystem, erwärmt werden, wobei im nachfolgenden davon ausgegangen wird, dass die Filamente F1 - F6 während des mindestens zweimaligen Umlaufens um die Streckrollenpaare auch die Temperatur der Streckrollenpaare angenommen haben.

Von dem Streckrollenpaar 5.1, 5.2 werden die Filamente F1 - F6 zum Streckrollenpaar 6.1, 6.2 geführt, wobei sie vorher durch eine Führung 14 auf Abstand voneinander gehalten werden. Die weitere Verstreckung und Erwärmung auf dem Streckrollenpaar 6.1, 6.2, die als Duorollen ausgeführt sind, erfolgt bei einer Geschwindigkeit von 2.500 m/min und einer Erwärmung auf 170° C. Die größte Verstreckung in der Streckvorrichtung 1 erfolgt zwischen dem Streckrollenpaar 5.1, 5.2 und dem Streckrollenpaar 6.1, 6.2, wobei die Verstreckung in Abhängigkeit des Werkstoffes der Filamente F1 - F6 zwischen 2,4 bis 3,1 betragen kann.

Nachfolgend laufen die Filamente F1 - F6 in die nachfolgend angeordnete Texturierdüse 8. Hier werden bei einer Temperatur von 180°C die Filamente F1 - F6 gekräuselt und deren Struktur auf der nachfolgenden Kühltrommel 9 eingefroren. Die Kühltrommel 9 kühlt die gekräuselten Filamente F1 - F6 bei einer Geschwindigkeit von 50 m/min. Dabei wird auf der Kühltrommel 9 ein Unterdruck von bis zu 50 mbar erzeugt, der durch ein Gebläse oder einen Ventilator erzeugt wird und dadurch die gekräuselten Filamente mittels Reibung auf der Oberfläche hält.

Eine nachfolgende leichte Verstreckung erfolgt mit Streckwerksrollen 10.1, 10.2 und 11.1, 11.2., die aktiv gekühlt sein können, wobei die Verstreckung vornehmlich dazu dient, eine Spannung auf die Filamente aufzubauen. Die Geschwindigkeit der Filamente kann auf der Streckwerksrolle 10.1 2.222 m/min betragen. Die Streckwerksrolle 11.1 transportiert die Filamente F1 - F6 mit einer Geschwindigkeit von 2.257 m/min bei einer Temperatur von 0° C bis 50°C, vorzugsweise bei einer Temperatur von 5° C bis 45°C. Zwischen den Streckwerksrollen 10.1, 10.2 und 11.1, 11.2 erfolgt nur eine leichte Verstreckung mit einem Faktor bis zu 1,05 statt. Die Kühlung der Streckwerksrollen erfolgt durch eine bekannte Flüssigkeitskühlung, bei der die Wärme aus dem Garn mittels der Kühlflüssigkeit über einen Wärmetauscher abgeführt wird.

Bei einer abschließenden Umlenkung durch den Umlenker 12 zum Wickler 13 werden die Filamente mit einer Geschwindigkeit von 2201 m/min auf mehreren Spulen aufgewickelt.

Der Vorteil dieser Anlage besteht darin, dass die gekräuselten Filamente nach dem Texturieren mit der Kühltrommel 9 über mindestens ein weiteres gekühltes Paar von Streckwerksrollen 10.1, 10.2 laufen und dort der Crimp bei einer Temperatur von 0° bis 50°C, vorzugsweise bei einer Temperatur von 5° bis 45°C weiter fixiert wird, was sich auf das Endprodukt vorteilhaft auswirkt. Durch die vorzugsweise aktive Kühlung der gekräuselten Filamente wird die Kristallinität sowie die Orientierung der Moleküle positiv beeinflusst, wodurch die gekräuselten Filamente elastischer werden. Vorzugsweise sind nach der Kühltrommel 9 mindestens zwei gekühlte Paare von Streckwerksrollen 10.1, 10.2, 11.1, 11.2 angeordnet, auf denen die gekräuselten Filamente bei einer Temperatur von 0° bis 50°C, vorzugsweise bei einer Temperatur von 5° bis 45°C weiter fixiert werden.

Je nach Material der zu verarbeitenden Filamente können zwischen der Kühltrommel 9 und dem Wickler 13 bis zu vier Streckwerksrollen 10, 11, 15, 16 angeordnet werden. Diese können insgesamt als einzelne Rollen ausgeführt sein, wie dies mit den Streckwerksrollen 15 und 16 dargestellt ist, oder als Monorollen, wie die Darstellung der Streckwerksrollen 10.1, 10.2, 11.1, 11.2, oder auch als Duorollen ausgeführt sein. Je nach Anlagenkonfiguration im Hinblick auf ein weiteres Verstrecken oder Relaxieren der Filamente können auch verschiedene Ausführungen von Streckwerksrollen miteinander kombiniert werden. Auch bei dieser Ausführungsform werden die gekräuselten Filamente bei einer Temperatur von 0° bis 50°C, vorzugsweise bei einer Temperatur von 5° bis 45°C weiter fixiert.

Nach dem Ausführungsbeispiel von Figur 1 laufen die Filamente F1 - F6 nach der Kühltrommel erst zum Paar der Streckwerksrollen 10.1, 10.2, weiter zur Streckwerksrolle 15, dann zur Streckwerksrolle 16 und abschließend zum Paar der Streckwerksrollen 11.1, 11.2, von dem die Filamente F1 - F6 dann zum Wickler 13 geführt wird.

Dabei wird vorzugsweise das erste Paar der Streckwerksrollen 10.1, 10.2 gekühlt, um den Crimp nach der Kühltrommel 9 weiter zu fixieren. Mit den nachfolgenden drei weiteren Streckwerksrollen 15, 16, 11.1, 11.2 können die gekräuselten Filamente weiter leicht gestreckt oder auch relaxiert werden, wodurch sich die Zugbelastung auf die Filamente durch den Wickler 13 reduziert. Die gekräuselten Filamente werden dadurch elastischer.

In einer weiteren Alternative kann das erste und/oder letzte Paar der vier Streckwerksrollen 10.1, 10.2, 11.1, 11.2 gekühlt werden. Das erste Paar der Streckwerksrollen fixiert den Crimp nochmal nach der Kühltrommel 9. Die beiden nachfolgenden Streckwerksrollen 15, 16 verstrecken die gekräuselten Filamente noch einmal leicht mit einer Verstreckung von 1,05 bis 1,2, wohingegen das letzte Paar an Streckwerksrollen 11.1, 11.2 die gekräuselten Filamente noch einmal durch seine aktive Kühlung fixiert. Es entsteht ein Teppichgarn mit einem sehr elastischen Bausch.

Die Ausführungsform mit vier gekühlten Streckwerksrollen hat den Vorteil, dass insbesondere bei sehr hohen Produktionsgeschwindigkeiten, beispielsweise bei über 2.500 m/min im Bereich der Streckwerksrollen, die Moleküle der texturierten Filamente sehr sicher fixiert werden und die Kräuselung der Filamente dauerhaft beibehalten wird.

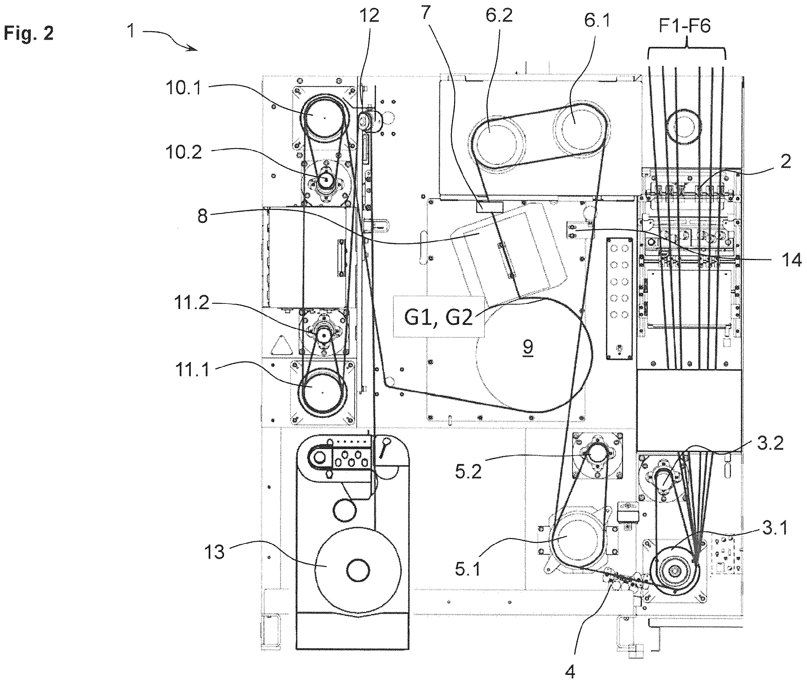

Figur 2 zeigt einen Ausschnitt einer Spinn-Streckanlage nach einem zweiten Ausführungsbeispiel, bei der sechs unterschiedlich gefärbte Filamente F1 - F6, beispielsweise aus Polyamid 6 (PA6), aus nicht dargestellten Spinndüsen in die Streckvorrichtung 1 einlaufen. Grundsätzlich ist bei dieser Art der Anlage die Verarbeitung von bis zu zwölf Filamenten möglich, wobei dieses Ausführungsbeispiel die Verarbeitung von sechs Filamenten beschreibt. Die Färbung der Filamente F1 - F6 erfolgt über unterschiedliche Partien von Kunststoffen, die separat extrudiert und mittels Spinnkopf zu jeweils einem endlosen Filament umgewandelt werden. Jedes Filament F1 - F6 besteht aus bis zu 1000 Endlosfilamenten, die unterhalb des Spinnkopfes vor der Streckvorrichtung 1 zu einem Filament F1 - F6 zusammengefasst werden. Die Filamente F1 - F6 aus Polyamid 6 laufen mit einer Geschwindigkeit von 925 m/min in die Streckvorrichtung 1 ein, werden in einer Präparationsvorrichtung 2 mit Öl oder einem Gleitmittel behandelt, und über ein Einlaufrollenpaar 3.1, 3.2 zu einem ersten Streckwerksrollenpaar 5.1, 5.2 umgeleitet. Zwischen dem Einlaufrollenpaar 3.1, 3.2 und dem ersten Streckwerksrollenpaar 5.1, 5.2 findet keine oder nur eine leichte Verstreckung mit einem Faktor bis zu 1,05 statt.

Zwischen dem Einlaufrollenpaar 3.1, 3.2 und dem Streckrollenpaar 5.1, 5.2 kann optional eine erste Düse 4 angeordnet sein, in der die sechs Filamente F1 - F6 seitlich mit einem gasförmigen Medium, vorzugsweise Luft, mit einem Druck (Überdrück) von 0,1 - 12 bar beaufschlagt werden. Die Düse 4 weist für jedes Filament F1 - F6 eine separate Führung auf, so dass die Filamente F1 - F6 nicht miteinander in Berührung kommen. Innerhalb der Führung der Düse 4 werden die bis zu 1000 Endlosfilamente miteinander verknotet, so dass sechs separat verknotete Filamente F1 - F6 aus der Düse 4 auslaufen und auf das Streckwerksrollenpaar 5.1, 5.2 geführt werden.

Beim Streckwerksrollenpaar 5.1, 5.2 werden die Filamente F1 - F6 bei einer Geschwindigkeit von 925 m/min auf eine Temperatur von 65°C aufgeheizt. Dieses Streckwerksrollenpaar 5.1, 5.2 ist als Monorolle ausgebildet, bei der nur die Streckwerksrolle 5.1 angetrieben ist. Die Streckwerksrolle 5.2 wird nicht angetrieben, sondern dreht sich über die Spannung der Filamente F1 - F6 mit. Die Streckwerksrollen 5.1, 5.2 können auch als Duorollen ausgeführt sein, bei denen beide Rollen angetrieben sind, und die im Wesentlichen einen gleich großen Außendurchmesser aufweisen. Dies hat den Vorteil, dass die stufenweise Erwärmung der Filamente F1 - F6 kontinuierlicher über eine längere Zeit erfolgen kann, was für die Umbildung der Molekülketten vorteilhaft ist. Die Oberflächen der Paare an Streckwerksrollen können dabei über ein nicht dargestelltes Heizsystem, beispielsweise ein elektrisches, dampf- oder flüssigkeitsbasiertes Heizsystem, erwärmt werden, wobei im nachfolgenden davon ausgegangen wird, dass die Filamente F1 - F6 während des mindestens zweimaligen Umlaufens um die Streckrollenpaare auch die Temperatur der Streckrollenpaare angenommen haben.

Von dem Streckrollenpaar 5.1, 5.2 werden die Filamente F1 - F6 zum Streckrollenpaar 6.1, 6.2 geführt, wobei sie vorher durch eine Führung 14 auf Abstand voneinander gehalten werden. Die weitere Verstreckung und Erwärmung auf dem Streckrollenpaar 6.1, 6.2, die als Duorollen ausgeführt sind, erfolgt bei einer Geschwindigkeit von 2.500 m/min und einer Erwärmung auf 170° C. Die größte Verstreckung in der Streckvorrichtung 1 erfolgt zwischen dem Streckrollenpaar 5.1, 5.2 und dem Streckrollenpaar 6.1, 6.2, wobei die Verstreckung in Abhängigkeit des Werkstoffes der Filamente F1 - F6 zwischen 2,4 bis 3,1 betragen kann.

Die Düse 7 weist für jedes Filament F1 - F6 ebenfalls eine separate Führung auf, so dass die Filamente F1 - F6 nicht miteinander in Berührung kommen. Innerhalb der Führung der Düse 7 werden die bis zu 1000 Endlosfilamente miteinander verknotet, so dass sechs separat verknotete Filamente F1 - F6 aus der Düse 7 auslaufen und in die Texturierdüse einlaufen. In der Düse 7 werden die sechs Filamente F1 - F6 durch ein eingeblasenes gasförmiges Medium, vorzugsweise Luft, bei einem Druck von 0,01 - 12 bar verknotet. Die Bildung der Garne G1, G2 erfolgt in der Texturierdüse 8, wobei insgesamt zwei gekräuselte Garne G1, G2 in der Texturierdüse 8 entstehen, die aus jeweils drei Filamente F1 - F3 und F4 - F6 mit jeweils einer Farbe pro Filament bestehen. Damit kann jedes Garn G1, G2 drei Filamente mit drei unterschiedlichen Farben aufweisen, die sich klar voneinander unterscheiden. Jedes Garn G1, G2 kann je nach Anlagenkonfiguration aber auch aus zwei oder vier Filamenten unterschiedlicher Farbe bestehen.

Der Vorteil der Erfindung bei dieser Ausführungsform besteht darin, dass das Garn G1, G2 mit den drei Filamenten die Farben der Filamente klar anzeigt, ohne dass eine Vermischung stattfindet. Nach dem Stand der Technik wäre dies nicht möglich, da die einzelnen Filamente F1 - F3 und F4 - F6 miteinander verkleben würden, was zu einer unklaren Abgrenzung der Farben führt. Im Unterschied zum Stand der Technik hat sich überraschenderweise gezeigt, dass bei einer extrem kurzen Verweilzeit innerhalb der Düse 7 die nachfolgende Verklebung der Filamente F1 - F3 und F4 - F6 in der Texturierdüse verhindert werden kann. Da die Geschwindigkeit der Filamente F1 - F6 in der gesamten Streckvorrichtung 1 bei den Streckwerksrollen 6.1 und 6.2 am höchsten ist, ist gleichzeitig die Verweilzeit der Filamente F1 - F6 in der nachfolgend angeordneten Düse 7 am geringsten. Die Verweilzeit der Filamente F1 - F6 beträgt bei einer Geschwindigkeit der Filamente F1 - F6 um die Streckwerksrollen 6.1 und 6.2 von 2.500 m/min bei PA6 in der Düse 7 nur rund 5 Millisekunden.

Bei anderen Kunststoffen können die Prozessparameter für die Streckwerksrollen beispielsweise wie folgt aussehen:

| **Parameter für** | | **Einheit** | **PP** | **PA6** | **PET** | **PA6-6** |
|---|---|---|---|---|---|---|
| Einlaufrollen 3.1, 3.2 | Geschwindigkeit | m/min | 660 | 925 | 1065 | 1158 |
| | Temperatur | °C | | | 110 | |
| Düse 4 | Druck | bar | 0,1-12 | 0,1-12 | 0,1-12 | 0,1-12 |
| Streckwerksrollen 5.1, 5.2 | Geschwindigkeit | m/min | 670 | 925 | 1110 | 1208 |
| | Temperatur | °C | 80 | 65 | 135 | 80 |
| Streckwerksrollen 6.1, 6.2 | Geschwindigkeit | m/min | 2030 | 2500 | 3200 | 2960 |
| | Temperatur | °C | 130 | 170 | 165 | 200 |
| Düse 7 | Druck | bar | 0,1-12 | 0,1-12 | 0,1-12 | 0,1-12 |
| Texturierdüse 8 | Druck | bar | 7,0 | 7.9 | 7.0 | 7 |
| | Temperatur | °C | 160 | 180 | 180 | 240 |
| Kühltrommel 9 | Geschwindigkeit | m/min | 50 | 50 | 29 | 37 |
| | Kühlwinkel | ∘ | 160 | 165 | 170 | 170 |
| Streckwerksrollen 10.1, 10.2 | Geschwindigkeit | m/min | 1660 | 2222 | 2785 | 2710 |
| | Temperatur | °C | 0-50 | 0-50 | 0-50 | 0-50 |
| Streckwerksrollen 11.1, 11.2 | Geschwindigkeit | m/min | 1710 | 2257 | 2810 | 2772 |
| | Temperatur | °C | 0-50 | 0-50 | 0-50 | 0-50 |
| Wickler 13 | Geschwindigkeit | m/min | 1695 | 2201 | 2860 | 2735 |

Vorteilhafterweise werden jetzt nur zwei Garne G1, G2 texturiert und weiter verstreckt, was die Anlage kompakter und preiswerter macht, als wenn sechs bzw. bis zu zwölf Filamente verarbeitet werden. Die nachfolgenden Streckwerksrollen können kürzer ausgeführt werden, was die Temperaturführung und die Lagerung vereinfacht.

Nach der Düse 7 laufen die Filamente F1 - F6 in die nachfolgend angeordnete Texturierdüse 8, in der sie zu dem Garn G1 und G2 konvergieren, wodurch die Texturierdüse 8 nur über zwei Düsenkanäle verfügen muss. Hier werden bei einer Temperatur von 180°C zwei gekräuselte Garne G1, G2 hergestellt, deren Struktur auf der nachfolgenden Kühltrommel 9 eingefroren wird. Die Filamente F1 - F6 werden nach der Düse 7 also wieder in der Texturierdüse 8 erwärmt, bei PA6 von 170°C auf 180°C.

Eine nachfolgende leichte Verstreckung erfolgt mit kalten Streckwerksrollen 10.1, 10.2 und 11.1, 11.2, die aktiv gekühlt werden.

Die Geschwindigkeit des Garns beträgt auf der Streckwerksrolle 10.1 2.222 m/min. Die Streckwerksrolle 11.1 transportiert das Garn G1, G2 mit einer Geschwindigkeit von 2.257 m/min bei einer Temperatur von 20° C bis 80°C, vorzugsweise bei einer Temperatur von 5° C bis 45°C. Zwischen den Streckwerksrollen 10.1, 10.2 und 11.1, 11.2 erfolgt nur eine leichte Verstreckung mit einem Faktor bis zu 1,05 statt. Die Kühlung der Streckwerksrollen kann durch eine bekannte Flüssigkeitskühlung erfolgen, bei der die Wärme aus dem Garn mittels der Kühlflüssigkeit über einen Wärmetauscher abgeführt wird. Aufgrund der kurzen Bauweise der Streckwerksrollen lässt sich deren Oberflächentemperatur sehr präzise einstellen. Die installierte Leistung zum Kühlen der Streckwerksrollen ist dabei deutlich niedriger als bei klassischen Kühlgaletten, die bis zu 12 Filamente kühlen müssen. Auch hier kann entsprechend dem Ausführungsbeispiel der Figur 1 mit bis zu vier gekühlten Streckwerksrollen in unterschiedlicher Kombination das Garn gekühlt werden.

Bei einer abschließenden Umlenkung durch den Umlenker 12 zum Wickler 13 wird das Garn G1, G2 mit einer Geschwindigkeit von 2201 m/min auf zwei Spulen aufgewickelt.

Der Vorteil dieser Anlage besteht darin, dass das gekräuselte Garn nach dem Texturieren mit der Kühltrommel 9 über mindestens ein weiteres gekühltes Paar von Streckwerksrollen 10.1, 10.2 läuft und dort der Crimp bei einer Temperatur von 0° bis 50°C, vorzugsweise bei einer Temperatur von 5° bis 45°C, weiter fixiert wird, was sich auf das Endprodukt vorteilhaft auswirkt. Durch die aktive Kühlung des gekräuselten Garnes wird die Kristallinität sowie die Orientierung der Moleküle positiv beeinflusst, wodurch das gekräuselte Garn elastischer wird. Vorzugsweise sind nach der Kühltrommel 9 mindestens zwei gekühlte Paare von Streckwerksrollen 10.1, 10.2, 11.1, 11.2 angeordnet, auf denen das gekräuselte Garn bei einer Temperatur von 0° bis 50°C, vorzugsweise bei einer Temperatur von 5° bis 45°C weiter fixiert wird.

Die Düse 4 kann optional verwendet werden. Das Verfahren zum separaten Verknoten der Filamente F1 - F6 in der Düse 7 und die Zusammenfassung zu den Garnen G1, G2 in der Texturierdüse 8 kann auch ohne die Düse 4 verwendet werden und bringt gute Ergebnisse. Die Verwendung der Düse 4 zum Verknoten der einzelnen Filamente F1 - F6 hat den Vorteil, dass die Struktur jedes einzelnen Filamentes F1 - F6 stabiler ist, was sich auf das nachfolgende Verknoten in der Düse 7 positiv auswirkt. Mit der Düse 4, die ein Verknoten der bis zu 1000 Endlosfilamente jedes Filamentes F1 - F6 bewirkt, wird die Farbtrennung nach der Verknotung in der Düse 7 noch klarer.

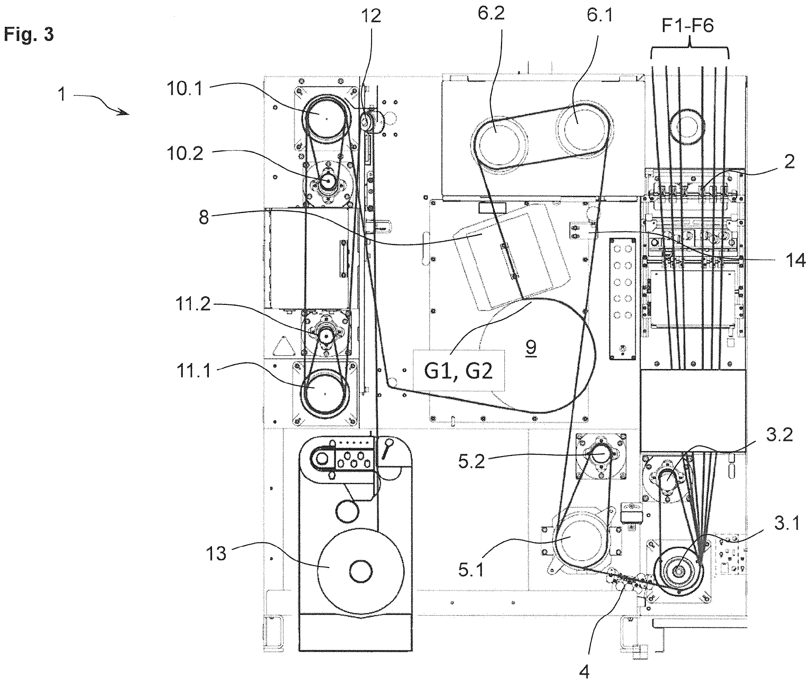

In einem zweiten Ausführungsbeispiel nach der Figur 3 werden durch die Verwendung der Düse 4 zwischen dem Einlaufrollenpaar 3.1, 3.2 und den Streckwerksrollen 5.1, 5.2 die beispielsweise sechs Filamente F1 - F6 separat verknotet. Aufgrund der kurzen Verweilzeit der Filamente F1 - F6 in der Düse 4 kann eine separate Verknotung erfolgen, so dass auch bei den nachfolgend in der Texturierdüse 8 erzeugten Garne G1, G2 aus den sechs Filamenten F1 - F6 eine klare Farbtrennung erreicht wird. Die weitere Verarbeitung der Filamente F1 - F6 erfolgt wie nach dem Ausführungsbeispiel 1, allerdings ohne die Düse 7. Der Vorteil dieser Konfiguration besteht darin, dass die separat verknoteten Filamente F1 - F6 ab der Düse 4 leichter und stabiler durch die gesamte Anlage geführt werden können. Auch nach diesem Ausführungsbeispiel kann durch eine sehr kurze Verweilzeit der Filamente F1 - F6 in der Düse 4 die Farbseparierung beibehalten werden. Die Verweilzeit des Kunststoffes der Filamente F1 - F6 in der Düse 7 beträgt dabei rund 10 Millisekunden.

Insgesamt können in der Anlage bis zu zwölf Filamente (F1 - F12) unterschiedlicher Farbe mit jeweils bis zu 1000 Endlosfilamenten verarbeitet werden, so dass bis zu vier Garne (G1...G4) entstehen können, wobei jedes Garn aus zwei, drei oder vier Filamenten unterschiedlicher Farbe bestehen kann.

Auch bei diesem Ausführungsbeispiel kann entsprechend dem Ausführungsbeispiel der Figur 1 mit bis zu vier gekühlten Streckwerksrollen in unterschiedlicher Kombination das Garn gekühlt werden.

Ein weiterer Vorteil der Erfindung besteht darin, dass eine bestehende Anlage mit sechs oder bis zu zwölf einlaufenden Filamenten nur eine Texturierdüse 8 mit zwei bzw. bis zu vier Kanälen benötigt, so dass nachfolgend die Verstreckung mit den Streckwerksrollen 10.1, 10.2, 15, 16, 11.1, 11.2 kürzer gebaut werden kann. Damit kann eine effizientere Kühlung der Streckwerksrollen 10.1, 10.2, 15, 16, 11.1, 11.2 erfolgen, wodurch die Anlage energieeffizienter wird. Durch die kürzeren Streckwerksrollen 10.1, 10.2, 15, 16, 11.1, 11.2 kann das Temperaturniveau jeder Streckwerksrolle 10.1, 10.2, 15, 16, 11.1, 11.2 präziser eingehalten werden.

Die Angaben in den Ausführungsbeispielen beziehen sich auf Prozessparameter am Beispiel von Polyamid 6. Die Erfindung kann bei allen Polymerarten wie beispielsweise PP, PET, PA6, PA6.6 oder PBT verwendet werden.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlicher Anordnungen, können sowohl für sich als auch in den verschiedensten Kombinationen erfindungswesentlich sein.

### Bezugszeichen

- 1: Streckvorrichtung
- 2: Präparationsvorrichtung
- 3.1, 3.2: Einlaufrollen
- 4: Düse
- 5.1, 5.2: Streckwerksrollen
- 6.1, 6.2: Streckwerksrollen
- 7: Düse
- 8: Texturiervorrichtung
- 9: Kühltrommel
- 10.1, 10.2: Streckwerksrollen
- 11.1, 11.2: Streckwerksrollen
- 12: Umlenkung
- 13: Wickler
- 14: Führung
- 15: Streckwerksrolle
- 16: Streckwerksrolle

- F1...Fn: Filamente
- G1...Gn: Garn

## Patentansprüche

1. Vorrichtung zur Erzeugung eines texturierten Filamentes oder Garnes, wobei mindestens ein Filament (F1 ... Fn) in eine Streckvorrichtung (1) geführt wird, dort von einem Paar Einlaufrollen (3.1, 3.2) zu mindestens zwei Paaren von Streckwerksrollen (5.1, 5.2; 6.1, 6.2) geführt und von diesen verstreckt wird, denen eine Texturiervorrichtung (8) mit einer Kühltrommel (9) nachgeordnet ist, **dadurch gekennzeichnet, dass** nach der Texturiervorrichtung (8) mit der Kühltrommel (9) mindestens eine Streckwerksrolle (10.1, 10.2, 15, 16, 11.1, 11.2) angeordnet ist, durch die das Filament bzw. Garn auf eine Temperatur von 0°C bis 50°C aktiv gekühlt wird, wobei die mindestens eine Streckwerksrolle mittels umlaufender Medien (Luft, Wasser) von innen gekühlt werden.

2. Vorrichtung nach Anspruch 1, **dadurch gekennzeichnet, dass** das mindestens eine Filament bzw. Garn auf eine Temperatur von 5°C bis 45°C aktiv gekühlt wird.

3. Vorrichtung nach einem der Ansprüche 1 bis 2, **dadurch gekennzeichnet, dass** die mindestens eine Streckwerksrolle (10.1, 10.2) als gekühlte Monorolle ausgebildet ist.

4. Vorrichtung nach einem der Ansprüche 1 bis 2, **dadurch gekennzeichnet, dass** mindestens zwei gekühlte Streckwerksrollen (10.1, 10.2, 11.1, 11.2) nach der Kühltrommel (9) angeordnet sind.

5. Vorrichtung nach einem der Ansprüche 1 bis 2, **dadurch gekennzeichnet, dass** vier Streckwerksrollen (10.1, 10.2, 15, 16, 11.1, 11.2) nach der Kühltrommel (9) angeordnet sind, wobei die erste (10.1, 10.2) und/oder die vierte Streckwerksrolle (11.1, 11.2) als gekühlte Streckwerksrolle ausgebildet ist.

6. Vorrichtung nach einem der Ansprüche 1 bis 2, **dadurch gekennzeichnet, dass** vier gekühlte Streckwerksrollen (10.1, 10.2, 15, 16, 11.1, 11.2) nach der Kühltrommel (9) angeordnet sind.

7. Vorrichtung nach einem der vorhergehenden Ansprüche, **dadurch gekennzeichnet, dass** vor der Texturiervorrichtung (8) mindestens eine Düse (4, 7) angeordnet ist, in der jedes Filament (F1 ... Fn) separat verknotet wird und aus den Filamenten (F1 ... Fn) in der Texturierdüse (8) mindestens ein Garn (G1, G2) gebildet wird.

8. Vorrichtung nach Anspruch 7, **dadurch gekennzeichnet, dass** die Düse (7) nach dem zweiten Paar von Streckwerksrollen (6.1, 6.2) und vor der Texturierdüse (8) angeordnet ist.

9. Vorrichtung nach Anspruch 7 oder 8, **dadurch gekennzeichnet, dass** die Düse (4) nach dem Paar Einlaufrollen (3.1, 3.2) und vor den Streckwerksrollen (5.1, 5.2; 6.1, 6.2) angeordnet ist.

10. Vorrichtung nach einem der Ansprüche 7 bis 9, **dadurch gekennzeichnet, dass** in die Düse (7) ein gasförmiges Medium mit einem Druck von 0,01 bis 12 bar, vorzugsweise mit einem Druck von 0,01 bis 6 bar, eingeblasen wird.

11. Vorrichtung nach Anspruch 8, **dadurch gekennzeichnet, dass** die Filamente (F1 ... Fn) auf dem Paar von Streckwerksrollen (6.1, 6.2), das direkt vor der Düse (7) angeordnet ist, mit einer Geschwindigkeit von mindestens 1.700 m/min verstreckt werden.

12. Vorrichtung nach einem der vorhergehenden Ansprüche, **dadurch gekennzeichnet, dass** das Paar von Streckwerksrollen (6.1, 6.2) als Duorollen ausgebildet ist.

13. Verfahren zur Erzeugung eines texturierten Filamentes oder Garnes, wobei mindestens ein Filament (F1 ... Fn) in eine Streckvorrichtung (1) geführt wird, dort von einem Paar Einlaufrollen (3.1, 3.2) zu mindestens zwei Paaren von Streckwerksrollen (5.1, 5.2; 6.1, 6.2) geführt und von diesen verstreckt wird, anschließend texturiert und auf einer Kühltrommel (9) gekühlt wird, **dadurch gekennzeichnet, dass** das texturierte Filament bzw. Garn nach der Kühltrommel (9) mittels mindestens einer Streckwerksrolle (10.1, 10.2, 15, 16, 11.1, 11.2) auf eine Temperatur von 0°C bis 50°C aktiv gekühlt wird, wobei die mindestens eine Streckwerksrolle mittels umlaufender Medien (Luft, Wasser) von innen gekühlt werden.

14. Verfahren nach Anspruch 13, **dadurch gekennzeichnet, dass** das mindestens eine Filament bzw. Garn auf eine Temperatur von 5°C bis 45°C aktiv gekühlt wird.

15. Verfahren nach einem der Ansprüche 13 bis 14, **dadurch gekennzeichnet, dass** die mindestens eine Streckwerksrolle (10.1, 10.2) als gekühlte Monorolle ausgebildet ist.

16. Verfahren nach einem der Ansprüche 13 bis 14, **dadurch gekennzeichnet, dass** die Kühlung des mindestens einen Filamentes bzw. Garnes durch mindestens zwei gekühlte Streckwerksrollen (10.1, 10.2, 11.1, 11.2) erfolgt.

17. Verfahren nach einem der Ansprüche 13 bis 14, **dadurch gekennzeichnet, dass** vier Streckwerksrollen (10.1, 10.2, 15, 16, 11.1, 11.2) nach der Kühltrommel (9) angeordnet sind, wobei die Kühlung des mindestens einen Filamentes bzw. Garnes auf der ersten (10.1, 10.2) und/oder der vierten Streckwerksrolle (11.1, 11.2) erfolgt.

18. Vorrichtung nach einem der Ansprüche 13 bis 14, **dadurch gekennzeichnet, dass** die Kühlung des mindestens einen Filamentes bzw. Garnes auf vier gekühlten Streckwerksrollen (10.1, 10.2, 15, 16, 11.1, 11.2) erfolgt.

19. Verfahren nach Anspruch 13, **dadurch gekennzeichnet, dass** vor dem Texturieren die Filamente (F1 ... Fn) jeweils separat verknotet werden und aus den einzelnen Filamenten (F1 ... Fn) in der nachfolgenden Texturierdüse (8) mindestens ein Garn (G1... Gn) gebildet wird.

20. Verfahren nach einem der Ansprüche 13 bis 19, **dadurch gekennzeichnet, dass** die Verknotung der Filamente (F1 ... Fn) nach einem zweistufigen Verstrecken erfolgt.

21. Verfahren nach einem der Ansprüche 13 bis 20, **dadurch gekennzeichnet, dass** die Verknotung der Filamente (F1 ... Fn) vor einem Verstrecken erfolgt.

22. Verfahren nach einem der Ansprüche 13 bis 21, **dadurch gekennzeichnet, dass** die Verknotung der Filamente (F1 ... Fn) durch ein gasförmiges Medium mit einem Druck von 0,01 bis 12 bar, vorzugsweise mit einem Druck von 0,01 bis 6 bar, erfolgt.

23. Verfahren nach Anspruch 13, **dadurch gekennzeichnet, dass** die Filamente (F1 ... Fn) auf dem Paar von Streckwerksrollen (6.1, 6.2), das direkt vor der Düse (7) angeordnet ist, mit einer Geschwindigkeit von mindestens 1.700 m/min verstreckt werden.

## Claims

1. Device for producing a textured filament or yarn, wherein at least one filament (F1 ... Fn) is guided into a drawing device (1), where it is guided by a pair of intake rollers (3.1, 3.2) to at least two pairs of drawing unit rollers (5.1, 5.2; 6.1, 6.2) and is drawn by the drawing unit rollers, downstream of which there is arranged a texturing device (8) having a cooling drum (9), **characterised in that** downstream of the texturing device (8) having the cooling drum (9) there is arranged at least one drawing unit roller (10.1, 10.2, 15, 16, 11.1, 11.2) by means of which the filament or yarn is actively cooled to a temperature of from 0°C to 50°C, wherein the at least one drawing unit roller is cooled from the inside by means of circulating media (air, water).

2. Device according to claim 1, **characterised in that** the at least one filament or yarn is actively cooled to a temperature of from 5°C to 45°C.

3. Device according to either claim 1 or claim 2, **characterised in that** the at least one drawing unit roller (10.1, 10.2) is in the form of a cooled mono roller.

4. Device according to either claim 1 or claim 2, **characterised in that** at least two cooled drawing unit rollers (10.1, 10.2, 11.1, 11.2) are arranged downstream of the cooling drum (9).

5. Device according to either claim 1 or claim 2, **characterised in that** four drawing unit rollers (10.1, 10.2, 15, 16, 11.1, 11.2) are arranged downstream of the cooling drum (9), wherein the first drawing unit roller (10.1, 10.2) and/or the fourth drawing unit roller (11.1, 11.2) is in the form of a cooled drawing unit roller.

6. Device according to either claim 1 or claim 2, **characterised in that** four cooled drawing unit rollers (10.1, 10.2, 15, 16, 11.1, 11.2) are arranged downstream of the cooling drum (9).

7. Device according to any one of the preceding claims, **characterised in that** there is arranged upstream of the texturing device (8) at least one nozzle (4, 7) in which each filament (F1 ... Fn) is separately interlaced, and at least one yarn (G1, G2) is formed from the filaments (F1 ... Fn) in the texturing nozzle (8).

8. Device according to claim 7, **characterised in that** the nozzle (7) is arranged downstream of the second pair of drawing unit rollers (6.1, 6.2) and upstream of the texturing nozzle (8).

9. Device according to claim 7 or 8, **characterised in that** the nozzle (4) is arranged downstream of the pair of intake rollers (3.1, 3.2) and upstream of the drawing unit rollers (5.1, 5.2; 6.1, 6.2).

10. Device according to any one of claims 7 to 9, **characterised in that** a gaseous medium at a pressure of from 0.01 to 12 bar, preferably at a pressure of from 0.01 to 6 bar, is blown into the nozzle (7).

11. Device according to claim 8, **characterised in that** the filaments (F1 ... Fn) are drawn on the pair of drawing unit rollers (6.1, 6.2) that is arranged directly upstream of the nozzle (7) at a speed of at least 1700 m/min.

12. Device according to any one of the preceding claims, **characterised in that** the pair of drawing unit rollers (6.1, 6.2) is in the form of duo rollers.

13. Method for producing a textured filament or yarn, wherein at least one filament (F1 ... Fn) is guided into a drawing device (1), where it is guided by a pair of intake rollers (3.1, 3.2) to at least two pairs of drawing unit rollers (5.1, 5.2; 6.1, 6.2) and is stretched by the drawing unit rollers, then textured and cooled on a cooling drum (9), **characterised in that** the textured filament or yarn is actively cooled downstream of the cooling drum (9) by means of at least one drawing unit roller (10.1, 10.2, 15, 16, 11.1, 11.2) to a temperature of from 0°C to 50°C, wherein the at least one drawing unit roller is cooled from the inside by means of circulating media (air, water).

14. Method according to claim 13, **characterised in that** the at least one filament or yarn is actively cooled to a temperature of from 5°C to 45°C.

15. Method according to either claim 13 or claim 14, **characterised in that** the at least one drawing unit roller (10.1, 10.2) is in the form of a cooled mono roller.

16. Method according to either claim 13 or claim 14, **characterised in that** the cooling of the at least one filament or yarn is carried out by means of at least two cooled drawing unit rollers (10.1, 10.2, 11.1, 11.2).

17. Method according to either claim 13 or claim 14, **characterised in that** four drawing unit rollers (10.1, 10.2, 15, 16, 11.1, 11.2) are arranged downstream of the cooling drum (9), wherein cooling of the at least one filament or yarn is carried out on the first drawing unit roller (10.1, 10.2) and/or the fourth drawing unit roller (11.1, 11.2).

18. Device according to either claim 13 or claim 14, **characterised in that** the cooling of the at least one filament or yarn is carried out on four cooled drawing unit rollers (10.1, 10.2, 15, 16, 11.1, 11.2).

19. Method according to claim 13, **characterised in that,** prior to texturing, the filaments (F1 ... Fn) are each interlaced separately and at least one yarn (G1 ... Gn) is formed from the individual filaments (F1 ... Fn) in the downstream texturing nozzle (8).

20. Method according to any one of claims 13 to 19, **characterised in that** the interlacing of the filaments (F1 ... Fn) is carried out after a two-stage drawing.

21. Method according to any one of claims 13 to 20, **characterised in that** the interlacing of the filaments (F1 ... Fn) is carried out prior to a drawing.

22. Method according to any one of claims 13 to 21, **characterised in that** the interlacing of the filaments (F1 ... Fn) is carried out by means of a gaseous medium at a pressure of from 0.01 to 12 bar, preferably at a pressure of from 0.01 to 6 bar.

23. Method according to claim 13, **characterised in that** the filaments (F1 ... Fn) are drawn on the pair of drawing unit rollers (6.1, 6.2) that is arranged directly upstream of the nozzle (7) at a speed of at least 1700 m/min.

## Revendications

1. Dispositif pour la production d'un filament ou fil texturé, au moins un filament (F1 ... Fn) étant amené dans un dispositif d'étirage (1), y étant amené par une paire de rouleaux d'entrée (3.1, 3.2) à au moins deux paires de rouleaux de banc d'étirage (5.1, 5.2 ; 6.1, 6.2) et étiré par ceux-ci, en aval desquels est agencé un dispositif de texturation (8) avec un tambour de refroidissement (9), **caractérisé en ce qu'**après le dispositif de texturation (8) avec le tambour de refroidissement (9) est agencé au moins un rouleau de banc d'étirage (10.1, 10.2, 15, 16, 11.1, 11.2), par lequel le filament ou le fil est refroidi activement à une température de 0 °C à 50 °C, l'au moins un rouleau de banc d'étirage étant refroidi de l'intérieur au moyen de milieux en circulation (air, eau).

2. Dispositif selon la revendication 1, **caractérisé en ce que** l'au moins un filament ou fil est refroidi activement à une température de 5 °C à 45 °C.

3. Dispositif selon l'une quelconque des revendications 1 à 2, **caractérisé en ce que** l'au moins un rouleau de banc d'étirage (10.1, 10.2) est configuré sous forme de mono-rouleau refroidi.

4. Dispositif selon l'une quelconque des revendications 1 à 2, **caractérisé en ce qu'**au moins deux rouleaux de banc d'étirage refroidis (10.1, 10.2, 11.1, 11.2) sont agencés après le tambour de refroidissement (9).

5. Dispositif selon l'une quelconque des revendications 1 à 2, **caractérisé en ce que** quatre rouleaux de banc d'étirage (10.1, 10.2, 15, 16, 11.1, 11.2) sont agencés après le tambour de refroidissement (9), le premier (10.1, 10.2) et/ou le quatrième rouleau de banc d'étirage (11.1, 11.2) étant configuré sous forme de rouleau de banc d'étirage refroidi.

6. Dispositif selon l'une quelconque des revendications 1 à 2, **caractérisé en ce que** quatre rouleaux de banc d'étirage refroidis (10.1, 10.2, 15, 16, 11.1, 11.2) sont agencés après le tambour de refroidissement (9).

7. Dispositif selon l'une quelconque des revendications précédentes, **caractérisé en ce qu'**au moins une buse (4, 7) est agencée avant le dispositif de texturation (8), dans laquelle chaque filament (F1 ... Fn) est noué séparément et au moins un fil (G1, G2) est formé à partir des filaments (F1 ... Fn) dans la buse de texturation (8).

8. Dispositif selon la revendication 7, **caractérisé en ce que** la buse (7) est agencée après la deuxième paire de rouleaux de banc d'étirage (6.1, 6.2) et avant la buse de texturation (8).

9. Dispositif selon la revendication 7 ou 8, **caractérisé en ce que** la buse (4) est agencée après la paire de rouleaux d'entrée (3.1, 3.2) et avant les rouleaux de banc d'étirage (5.1, 5.2 ; 6.1, 6.2).

10. Dispositif selon l'une quelconque des revendications 7 à 9, **caractérisé en ce qu'**un milieu gazeux est injecté dans la buse (7) à une pression de 0,01 à 12 bar, de préférence à une pression de 0,01 à 6 bar.

11. Dispositif selon la revendication 8, **caractérisé en ce que** les filaments (F1 ... Fn) sont étirés à une vitesse d'au moins 1 700 m/min sur la paire de rouleaux de banc d'étirage (6.1, 6.2) agencée directement avant la buse (7).

12. Dispositif selon l'une quelconque des revendications précédentes, **caractérisé en ce que** la paire de rouleaux de banc d'étirage (6.1, 6.2) est configurée sous forme de rouleaux doubles.

13. Procédé de production d'un filament ou fil texturé, au moins un filament (F1 ... Fn) étant amené dans un dispositif d'étirage (1), y étant amené par une paire de rouleaux d'entrée (3.1, 3.2) à au moins deux paires de rouleaux de banc d'étirage (5.1, 5.2 ; 6.1, 6.2) et étant étiré par ceux-ci, étant ensuite texturé et refroidi sur un tambour de refroidissement (9), **caractérisé en ce que** le filament ou fil texturé est refroidi activement après le tambour de refroidissement (9) au moyen d'au moins un rouleau de banc d'étirage (10.1, 10.2, 15, 16, 11.1, 11.2) à une température de 0 °C à 50 °C, l'au moins un rouleau de banc d'étirage étant refroidi de l'intérieur au moyen de milieux en circulation (air, eau).

14. Procédé selon la revendication 13, **caractérisé en ce que** l'au moins un filament ou fil est refroidi activement à une température de 5 °C à 45 °C.

15. Procédé selon l'une quelconque des revendications 13 à 14, **caractérisé en ce que** l'au moins un rouleau de banc d'étirage (10.1, 10.2) est configuré sous forme de mono-rouleau refroidi.

16. Procédé selon l'une quelconque des revendications 13 à 14, **caractérisé en ce que** le refroidissement de l'au moins un filament ou fil est effectué par au moins deux rouleaux de banc d'étirage refroidis (10.1, 10.2, 11.1, 11.2).

17. Procédé selon l'une quelconque des revendications 13 à 14, **caractérisé en ce que** quatre rouleaux de banc d'étirage (10.1, 10.2, 15, 16, 11.1, 11.2) sont agencés après le tambour de refroidissement (9), le refroidissement de l'au moins un filament ou fil étant effectué sur le premier (10.1, 10.2) et/ou le quatrième rouleau de banc d'étirage (11.1, 11.2).

18. Dispositif selon l'une quelconque des revendications 13 à 14, **caractérisé en ce que** le refroidissement de l'au moins un filament ou fil est effectué sur quatre rouleaux de banc d'étirage refroidis (10.1, 10.2, 15, 16, 11.1, 11.2).

19. Procédé selon la revendication 13, **caractérisé en ce qu'**avant la texturation, les filaments (F1 ... Fn) sont noués séparément et au moins un fil (G1 ... Gn) est formé à partir des filaments individuels (F1 ... Fn) dans la buse de texturation (8) suivante.

20. Procédé selon l'une quelconque des revendications 13 à 19, **caractérisé en ce que** le nouage des filaments (F1 ... Fn) est effectué après un étirage en deux étapes.

21. Procédé selon l'une quelconque des revendications 13 à 20, **caractérisé en ce que** le nouage des filaments (F1 ... Fn) est effectué avant un étirage.

22. Procédé selon l'une quelconque des revendications 13 à 21, **caractérisé en ce que** le nouage des filaments (F1 ... Fn) est effectué par un milieu gazeux à une pression de 0,01 à 12 bar, de préférence à une pression de 0,01 à 6 bar.

23. Procédé selon la revendication 13, **caractérisé en ce que** les filaments (F1 ... Fn) sont étirés à une vitesse d'au moins 1 700 m/min sur la paire de rouleaux de banc d'étirage (6.1, 6.2) agencée directement avant la buse (7).
